# EUROPÄISCHE PATENTSCHRIFT

(11) **EP 3 990 944 B1**
(45) Veröffentlichungstag und Bekanntmachung des Hinweises auf die Patenterteilung: **16.07.2025**
(21) Anmeldenummer: 20736264.1
(22) Anmeldetag: 23.06.2020
(51) Int. Cl.: G01S 7/497, G01S 17/931

(54) **BESTIMMEN EINER NICKWINKELLAGE EINES AKTIVEN OPTISCHEN SENSORSYSTEMS**
DETERMINING A PITCH ANGLE POSITION OF AN ACTIVE OPTICAL SENSOR SYSTEM
DÉTERMINATION D'UN ANGLE DE TANGAGE D'UN SYSTÈME DE DÉTECTION OPTIQUE ACTIF

(30) Priorität: 27.06.2019 DE 102019117312
(43) Veröffentlichungstag der Anmeldung: 04.05.2022
(73) Patentinhaber: Valeo Schalter und Sensoren GmbH, 74321 Bietigheim-Bissingen (DE)
(72) Erfinder: ROSALES, Javier, 36400 Porrino (Pontevedra) (ES); SERGEEV, Nikolai, 74321 Bietigheim-Bissingen (DE)
(74) Vertreter: Pothmann, Karsten
(86) Internationale Anmeldenummer: PCT/EP2020/067435
(87) Internationale Veröffentlichungsnummer: WO 2020/260242

(56) Entgegenhaltungen:
- WO-A1-2018/166956
- WO-A2-2004/036248
- JP-A- 2015 075 382

## Beschreibung

Die Erfindung betrifft ein Verfahren zum Bestimmen einer Nickwinkellage eines aktiven optischen Sensorsystems, das an einem Kraftfahrzeug montiert ist, welches sich auf einer Fahrbahn befindet. Die Erfindung betrifft ferner ein entsprechendes aktives optisches Sensorsystem zur Montage an einem Kraftfahrzeug, ein Kraftfahrzeug, ein Computerprogramm und ein computerlesbares Speichermedium.

Aktive optische Sensorsysteme, wie beispielsweise Lidarsysteme, können an Kraftfahrzeugen montiert werden, um vielfältige Funktionen elektronischer Fahrzeugführungssysteme oder Fahrerassistenzsysteme zu realisieren. Diese Funktionen beinhalten Abstandsmessungen, Abstandsregelalgorithmen, Spurhalteassistenten, Objektverfolgungsfunktionen und so weiter. Abweichungen einer Einbauposition oder -orientierung des Sensorsystems von einer nominalen Orientierung beeinflussen die Genauigkeit der Messwerte beziehungsweise deren Interpretation und Auswertung und damit die Zuverlässigkeit und Robustheit der entsprechenden Funktionen. Daher ist es erforderlich, das aktive optische Sensorsystem zu kalibrieren, um entsprechende Orientierungs- oder Positionsabweichungen kompensieren zu können.

Im Dokument US 9,052,721 B1 wird ein Verfahren zur Korrektur der Ausrichtung eines an einem Fahrzeug montierten Laserscanners beschrieben. Das Verfahren beruht darauf, eine dreidimensionale Punktwolke des Laserscanners mit einer dreidimensionalen Referenzpunktwolke zu vergleichen, um eine fehlerhafte Ausrichtung des Laserscanners zu berechnen. Die Referenzpunktwolke ist dabei vorab durch Abfahren der Fahrbahn mit dem Fahrzeug oder einem weiteren Fahrzeug aufgezeichnet worden.

Dadurch kann die Fehlausrichtung des Laserscanners nur basierend auf Messpunkten kompensiert werden, wenn für den entsprechenden Fahrbahnabschnitt Referenzmesspunkte vorliegen. Die Anzahl der zur Verfügung stehenden Messpunkte beziehungsweise die Häufigkeit, mit der die Kalibrierung durchgeführt werden kann, beeinflusst jedoch maßgeblich die Genauigkeit der Kompensation der Orientierungs- oder Positionsabweichungen. Zudem ist es nachteilhaft, dass die Referenzpunktwolke vorab aufgezeichnet werden muss. Verfahren zur Bestimmung der Ausrichtung eines optischen Sensorsystems sind auch aus JP 2015-75382 A und WO 2018/166956 bekannt.

Vor diesem Hintergrund ist es eine Aufgabe der vorliegenden Erfindung, ein verbessertes Konzept zum Bestimmen einer Nickwinkellage eines aktiven optischen Sensorsystems anzugeben, das ohne eine vorab aufgezeichnete Referenzpunktwolke auskommt und mit dem insbesondere eine höhere Genauigkeit erzielt werden kann.

Erfindungsgemäß wird diese Aufgabe gelöst durch den jeweiligen Gegenstand der unabhängigen Patentansprüche. Vorteilhafte Weiterbildungen und weitere Ausgestaltungen sind Gegenstand der abhängigen Patentansprüche.

Das verbesserte Konzept beruht auf der Idee, zwei verschiedene Untermengen von Abtastpunkten einer Fahrbahn zu erzeugen und ein Paar von Abtastpunkten aus den verschiedenen Untermengen daraus zu bestimmen, deren Verbindungsvektor projiziert in eine Sendeebene des Sensorsystems parallel zu einer Longitudinalachse des Sensorsystems ist. Der Winkel, den der Verbindungsvektor mit der Longitudinalachse des Sensorsystems einschließt dient als Maß für die Nickwinkellage.

Gemäß einem ersten unabhängigen Aspekt des verbesserten Konzepts wird ein Verfahren zum Bestimmen einer Nickwinkellage eines aktiven optischen Sensorsystems angegeben, wobei das Sensorsystem an einem Kraftfahrzeug montiert ist, welches sich auf einer Fahrbahn befindet. Mittels des Sensorsystems wird eine Punktwolke erzeugt, die eine erste Untermenge von Abtastpunkten der Fahrbahn und eine zweite Untermenge von Abtastpunkten der Fahrbahn enthält. Mittels einer Recheneinheit des Sensorsystems wird ein erstes Paar von Abtastpunkten identifiziert, wobei ein Punkt des ersten Paars Teil der ersten Untermenge ist und ein weiterer Punkt des ersten Paars Teil der zweiten Untermenge ist. Eine Projektion eines ersten Verbindungsvektors des ersten Paars in eine Sendeebene des Sensorsystems ist parallel zu einer Longitudinalachse des Sensorsystems. Mittels der Recheneinheit wird ein erster Winkel bestimmt, den der erste Verbindungsvektor mit der Longitudinalachse des Sensorsystems einschließt, um die Nickwinkellage zu bestimmen.

Dass ein Punkt Teil einer Untermenge ist, kann derart verstanden werden, dass die Untermenge den entsprechenden Punkt beinhaltet.

Der Verbindungsvektor ist insbesondere gegeben durch einen Vektor, der den Punkt als Startpunkt und den weiteren Punkt als Endpunkt hat.

Hier und im Folgenden kann ein aktives optisches Sensorsystem dadurch als solches definiert sein, dass es eine Sendeeinheit mit einer Lichtquelle aufweist, insbesondere zum Aussenden von Licht beziehungsweise Lichtimpulsen. Die Lichtquelle kann insbesondere als Laser ausgestaltet sein. Des Weiteren weist ein aktives optisches Sensorsystem eine Empfangseinheit mit wenigstens einem optischen Detektor, insbesondere zum Erfassen von Licht oder Lichtimpulsen auf, insbesondere reflektierten Anteilen des ausgesandten Lichts. Das aktive optische Sensorsystem ist insbesondere dazu eingerichtet, basierend auf dem detektierten Licht eines oder mehrere Sensorsignale zu erzeugen und auszugeben.

Hier und im Folgenden kann der Begriff "Licht" derart verstanden werden, dass damit elektromagnetische Wellen im sichtbaren, im infraroten und/oder im ultravioletten Spektralbereich umfasst sind. Dementsprechend kann auch der Begriff "optisch" derart verstanden werden, dass es sich auf Licht nach diesem Verständnis bezieht.

Das Licht, welches von dem aktiven optischen Sensorsystem ausgesendet wird, kann insbesondere infrarotes Licht, beispielsweise mit einer Wellenlänge von 905 nm, ungefähr 905 nm, 1.200 nm oder ungefähr 1.200 nm beinhalten. Damit kann jeweils ein Wellenlängenbereich mit einer breiteren Verteilung gemeint sein, welche für die entsprechende Lichtquelle typisch ist.

Im vorliegenden Falle des aktiven optischen Sensorsystems kann es sich bei der Lichtquelle beispielsweise um eine Laserlichtquelle handeln. Die genannten Wellenlängen können, im Rahmen üblicher Toleranzen, beispielsweise Peakwellenlängen des Laserspektrums entsprechen.

Dass mittels des Sensorsystems die Punktwolke erzeugt wird, kann beispielsweise derart verstanden werden, dass mittels der Empfangseinheit basierend auf detektierten Anteilen des reflektierten Lichts wenigstens ein Sensorsignal erzeugt wird und die Recheneinheit basierend auf dem wenigstens einen Sensorsignal entsprechende Abtastpunkte der Punktwolke erzeugt, wobei jeder Abtastpunkt ein dreidimensionales Koordinatentupel von Ortsraumkoordinaten, insbesondere in einem Sensorkoordinatensystem des Sensorsystems, enthält.

Das Sensorsystem kann beispielsweise eine Ablenkeinrichtung, beispielsweise mit einem beweglichen oder drehbar gelagerten Spiegel, beinhalten, mittels der von der Sendeeinheit erzeugte Lichtstrahlen kontrolliert abgelenkt werden können.

Insbesondere entspricht die Longitudinalachse des Sensorsystems, welche beispielsweise eine X-Achse des Sensorkoordinatensystems definiert, einer Aussenderichtung der Lichtstrahlen bei einem Aussendewinkel von Null Grad, also beispielweise bei einer Neutralstellung der Ablenkvorrichtung. Die Ablenkvorrichtung kann von der Neutralstellung abweichende Stellungen einnehmen, um die Lichtstrahlen abzulenken, sodass die Lichtstrahlen innerhalb der Sendeebene aus dem Sensorsystem austreten.

Eine Querachse des Sensorsystems, welche beispielsweise eine Y-Achse des Sensorkoordinatensystems definiert, liegt innerhalb der Sendeebene und steht beispielsweise senkrecht auf der Longitudinalachse, welche per Konstruktion ebenfalls innerhalb der Sendeebene liegt. Eine Normalachse des Sensorsystems steht senkrecht auf der Longitudinalachse und der Querachse des Sensorsystems. Die Normalachse des Sensorsystems definiert beispielsweise eine Z-Achse des Sensorkoordinatensystems.

Mit anderen Worten ist eine Blickrichtung oder Aussenderichtung des Sensorsystems bei Neutralstellung gleich der X-Achse des Sensorkoordinatensystems. Die Sendeebene ist durch die X-Y-Ebene des Sensorkoordinatensystems gegeben. Das Sensorsystem kann das Licht mit unterschiedlichen Aussendewinkeln innerhalb der Sendeebene aussenden.

Die reflektierten Anteile des Lichts können mittels der Empfangseinheit beispielsweise ortsaufgelöst empfangen werden, sodass neben den unterschiedlichen Aussendewinkeln auch unterschiedliche Empfangswinkel erfasst und bestimmt werden können. Zudem kann, beispielsweise mittels einer Lichtlaufzeitmessung, TOF, eine Entfernung zwischen dem Sensorsystem und einem Punkt oder Objekt, an dem das Licht reflektiert wurde, bestimmt werden. In dieser Weise ist es möglich, die Punktwolke als dreidimensionale Punktwolke, also als Punktwolke aus dreidimensionalen Ortsraumkoordinatentupeln, zu erzeugen.

Die Ortsauflösung der Empfangseinheit kann beispielsweise erzielt werden, indem die Empfangseinheit mindestens zwei optische Detektoren aufweist. Die mittels eines der Detektoren erfassten Abtastpunkte werden auch als Lage bezeichnet. Lagen, die auf Reflexionen von der Fahrbahn zurückgehen, werden auch als Bodenlagen, Ground Layers oder Touchdown Lines bezeichnet.

Bei der ersten und der zweiten Untermenge handelt es sich insbesondere um verschiedene Bodenlagen.

Eine Longitudinalachse des Kraftfahrzeugs, welche insbesondere eine X-Achse eines Fahrzeugkoordinatensystems definiert, ist beispielsweise gegeben durch eine Fahrtrichtung des Kraftfahrzeugs bei Neutralstellung eines Lenksystems des Kraftfahrzeugs oder bei einem Lenkwinkel, insbesondere einem Radwinkel oder Lenkradwinkel, des Kraftfahrzeugs von Null Grad. Eine Querachse des Kraftfahrzeugs steht senkrecht auf der Longitudinalachse des Kraftfahrzeugs und liegt in einer Ebene, die parallel zur Fahrbahn ist, beziehungsweise parallel zu einer Ebene, innerhalb der Auflagepunkte der Räder des Kraftfahrzeugs auf der Fahrbahn liegen. Die Querachse definiert insbesondere eine Y-Achse des Fahrzeugkoordinatensystems. Eine Normalachse des Kraftfahrzeugs, welche insbesondere eine Z-Achse des Fahrzeugkoordinatensystems definiert, steht senkrecht auf der Longitudinalachse und der Querachse des Kraftfahrzeugs.

Eine Gesamtwinkellage des Sensorsystems kann beispielsweise durch die Nickwinkellage, eine Gierwinkellage sowie eine Rollwinkellage des Sensorsystems definiert werden. Dabei sind ein Nickwinkel, ein Gierwinkel und ein Rollwinkel des Sensorsystems als Rotationswinkel oder Euler-Winkel des Sensorkoordinatensystems bezüglich des Fahrzeugkoordinatensystems nach einer vorgegebenen Konvention definiert.

Die Konvention kann beispielsweise derart sein, dass sich das Sensorkoordinatensystem aus dem Fahrzeugkoordinatensystem durch die folgenden drei Rotationen ergibt, wobei davon ausgegangen wird, dass das Sensorkoordinatensystem und das Fahrzeugkoordinatensystem zunächst identisch sind: Das Sensorkoordinatensystem wird um den Gierwinkel um die Z-Achse des Fahrzeugkoordinatensystems rotiert. Danach wird das resultierende Sensorkoordinatensystem um den Nickwinkel um die resultierende Y-Achse des resultierenden Sensorkoordinatensystems rotiert. Danach wird das resultierende Sensorkoordinatensystem um den Rollwinkel um die resultierende X-Achse des resultierenden Sensorkoordinatensystems rotiert. Andere Konventionen sind ebenso möglich.

Falls der Gier- und der Rollwinkel gleich Null sind, entspricht der Nickwinkel insbesondere einem Rotationswinkel des Sensorkoordinatensystems um die Y-Achse des Fahrzeugkoordinatensystems.

Die Nickwinkellage entspricht insbesondere einem Schätzwert oder Messwert für den Nickwinkel des Sensorsystems.

Zur Durchführung des Verfahrens zum Bestimmen der Nickwinkellage nach dem verbesserten Konzept wird beispielsweise angenommen, dass der Gierwinkel gleich Null oder vernachlässigbar klein ist oder dass das Sensorsystem vorab bezüglich des Gierwinkels kalibriert wurde. Falls vorab eine Kalibrierung bezüglich des Gierwinkels durchgeführt wurde, wurde vorab, beispielsweise mittels der Recheneinheit, die Gierwinkellage des Sensorsystems bestimmt. Zum Erzeugen der Punktwolke wurde dann die Gierwinkellage berücksichtigt, indem die Ortsraumkoordinaten der Abtastpunkte entsprechend normalisiert wurden, sodass sie scheinbar von einem Sensorsystem mit verschwindendem Gierwinkel erzeugt wurden. Dementsprechend kann hier und im Folgenden ohne Beschränkung der Allgemeinheit davon ausgegangen werden, dass der Gierwinkel gleich Null ist.

In verschiedenen Ausführungsformen beinhaltet das Verfahren zum Bestimmen der Nickwinkellage nach dem verbesserten Konzept die Verfahrensschritte zum Kalibrieren des Sensorsystems bezüglich des Gierwinkels.

Entsprechendes kann für den Rollwinkel gelten. Der Rollwinkel beeinflusst jedoch die Bestimmung des Nickwinkels in der nach dem verbesserten Konzept beschriebenen Weise nicht. Es ist daher nicht erforderlich, dass der Rollwinkel vorab bestimmt wurde. Dementsprechend kann hier und im Folgenden ohne Beschränkung der Allgemeinheit davon ausgegangen werden, dass der Rollwinkel gleich Null ist.

Unter den erläuterten Annahmen liegt die Longitudinalachse des Sensorsystems in der X-Z-Achse des Fahrzeugkoordinatensystems. Der Nickwinkel kann also auch als Winkel verstanden werden, den die Longitudinalachse des Sensorsystems mit der Longitudinalachse des Kraftfahrzeugs einschließt.

Dass das Sensorsystem an dem Kraftfahrzeug montiert ist, kann beispielsweise derart verstanden werden, dass das Sensorsystem an dem Kraftfahrzeug befestigt ist und kann insbesondere auch bedeuten, dass das Sensorsystem teilweise oder vollständig innerhalb des Kraftfahrzeugs verbaut ist. Dabei ist jedenfalls sichergestellt, dass die Sendeeinheit das Licht in eine Umgebung des Kraftfahrzeugs außerhalb des Kraftfahrzeugs aussenden kann und die Empfangseinheit die reflektierten Anteile empfangen kann.

Dass sich das Kraftfahrzeug auf der Fahrbahn befindet, kann insbesondere derart verstanden werden, dass es sich auf der Fahrbahn fortbewegt oder auf dieser steht.

Die erste und die zweite Untermenge enthalten jeweils mindestens zwei Abtastpunkte. Vorzugsweise enthalten die Untermengen jeweils eine Vielzahl von Abtastpunkten, also beispielsweise eine Anzahl von Abtastpunkten in der Größenordnung von einigen 10, einigen 100 oder einigen 1.000 Abtastpunkten. Insbesondere entspricht die Anzahl der Abtastpunkte einer Untermenge der Anzahl von unterschiedlichen Aussendewinkeln für das Licht, die mittels der Sendeeinheit beziehungsweise der Ablenkvorrichtung einstellbar sind.

Gemäß zumindest einer Ausführungsform enthält die Ablenkvorrichtung einen um eine Rotationsachse drehbar gelagerten Spiegel. Die Sendeeinheit, welche beispielsweise fest bezüglich des Sensorkoordinatensystems montiert sein kann, sendet das Licht aus, welches auf einen definierten Punkt des Spiegels trifft und je nach Winkel- oder Drehposition des Spiegels entsprechend einem definierten Aussendewinkel innerhalb der Sendeebene ausgesendet wird. Die jeweilige Winkelposition des Spiegels kann beispielsweise mittels eines Drehgebers erfasst werden, der an einer Welle angeordnet ist oder mit der Welle gekoppelt ist, die entlang der Rotationsachse des Spiegels ausgerichtet ist.

In alternativen Ausführungsformen kann die Ablenkvorrichtung ein um eine oder zwei Achsen kipp- oder schwenkbares Spiegelelement zum Ablenken des Lichts in der Sendeebene aufweisen. Das Spiegelelement kann beispielsweise als mikroelektromechanisches System, MEMS, ausgestaltet sein.

Das erste Paar von Abtastpunkten besteht insbesondere aus dem Punkt und dem weiteren Punkt des ersten Paars. Entsprechendes, nämlich dass ein Paar von Abtastpunkten stets aus zwei Abtastpunkten besteht, gilt auch für im weiteren Verlauf eingeführte Paare von Abtastpunkten.

Das Identifizieren des ersten Paars mittels der Recheneinheit kann beispielsweise derart verstanden werden, dass mittels der Recheneinheit der Punkt und der weitere Punkt des ersten Paars derart ausgewählt werden, dass die beschriebene Bedingung für die Projektion des ersten Verbindungsvektors gegeben ist. Insbesondere kann die Recheneinheit für ein gegebenes Paar von Abtastpunkten den entsprechenden Verbindungsvektor sowie dessen Projektion in die Sendeebene berechnen, ob die Projektion parallel zur Longitudinalachse des Sensorsystems ist, indem ein Winkel zwischen der Projektion und der Longitudinalachse des Sensorsystems berechnet und mit Null verglichen wird. Die Projektion des ersten Verbindungsvektors kann insbesondere dann als parallel zu der Longitudinalachse des Sensorsystems angesehen werden, wenn der entsprechende Winkel gleich Null ist oder kleiner als ein vorgegebener Toleranzwinkel.

Insbesondere durch die Ortsauflösung der Empfangseinheit, beispielsweise durch die Verwendung unterschiedlicher optischer Detektoren, kann ein solches Paar von Abtastpunkten gefunden werden, dessen Verbindungsvektor projiziert in die Sendeebene parallel zur Longitudinalachse des Sensorsystems ist.

Die Projektion p des ersten Verbindungsvektors v kann beispielsweise wie folgt ausgedrückt werden: p = v - (v*z_{S}) z_{S}. Dabei bezeichnet z_{S} den Richtungsvektor der Z-Achse des Sensorkoordinatensystems.

Der erste Winkel entspricht insbesondere einem Schätzwert für den Nickwinkel. Daraus kann, gegebenenfalls mit weiteren Schätzwerten für den Nickwinkel, die Nickwinkellage bestimmt werden, beispielsweise durch Mittelwertbildung. Alternativ kann die Nickwinkellage gleich dem ersten Winkel sein.

Der erste Winkel δ kann insbesondere gemäß der Gleichung δ = arctan([Z_{B} - Z_{A}]/[X_{B} - X_{A}]) berechnet werden, wobei X_{A} die X-Koordinate des Punktes des ersten Paars, Z_{A} dessen Z-Koordinate, X_{B} die X-Koordinate des weiteren Punktes des ersten Paars und Z_{B} dessen Z-Koordinate bezeichnen, jeweils im Sensorkoordinatensystem.

Gemäß dem verbesserten Konzept kann die Nickwinkellage des Sensorsystems online, also während eines Betriebs des Kraftfahrzeugs und ohne dedizierte Kalibriervorlage, auch als Kalibriertarget bezeichnet, bestimmt werden. Durch die Verwendung verschiedener Untermengen von Abtastpunkten der Fahrbahn, also insbesondere von unterschiedlichen Bodenlagen, zur Bestimmung des ersten Winkels sind keinerlei Referenzdaten erforderlich, die beispielsweise vorab aufgezeichnet werden müssen. Zudem erfordert das verbesserte Konzept außer der Fahrbahn selbst keine Referenzobjekte in der Umgebung des Kraftfahrzeugs, wie etwa Fahrbahnmarkierungen oder Fahrbahnbegrenzungen, um die Nickwinkellage zu bestimmen. Dies ist insbesondere von Vorteil, da die Fahrbahn naturgemäß stets zur Verfügung steht und entsprechend auch die Bodenlagen permanent oder nahezu permanent verfügbar sind.

Im Vergleich zu Verfahren, die auf Referenzdaten oder Referenzobjekten beruhen, kann das Verfahren nach dem verbesserten Konzept nahezu zu jedem Zeitpunkt des Kraftfahrzeugbetriebs durchgeführt werden. Dadurch kann mehr oder weniger ständig die Nickwinkellage bestimmt werden, was zu einer sehr viel größeren Anzahl von Messpunkten und entsprechend zu einer sehr viel höheren Genauigkeit der Bestimmung der Nickwinkellage führt.

Zudem ist es nach dem verbesserten Konzept nicht erforderlich, eine Einbauhöhe des Sensorsystems zu kennen. Dies ist insbesondere deshalb vorteilhaft, da die Einbauhöhe des Sensorsystems in den meisten Fällen nicht oder nur mit geringer Genauigkeit bekannt ist. Auch dadurch wird eine erhöhte Genauigkeit der Bestimmung der Nickwinkellage erzielt.

Gemäß zumindest einer Ausführungsform des Verfahrens wird zum Erzeugen der Punktwolke Licht mittels der Sendeeinheit des Sensorsystems in die Umgebung des Sensorsystems ausgesendet. Reflektierte Anteile des Lichts werden von der Empfangseinheit des Sensorsystems detektiert. Wenigstens ein Sensorsignal wird mittels der Empfangseinheit basierend auf den detektierten reflektierten Anteilen erzeugt. Die Punktwolke wird mittels der Recheneinheit basierend auf dem wenigstens einen Sensorsignal erzeugt.

Die Sendeeinheit beinhaltet beispielsweise die Lichtquelle, welche insbesondere als Laserlichtquelle, beispielsweise als Laserdiode, ausgeführt ist. Die Laserlichtquelle ist insbesondere als Infrarotlaser ausgeführt. Die Peak-Wellenlänge des entsprechenden Laserspektrums kann beispielsweise 905 nm oder 1.200 nm betragen.

Gemäß zumindest einer Ausführungsform werden die Abtastpunkte der ersten Untermenge mittels eines ersten optischen Detektors des Sensorsystems, insbesondere der Empfangseinheit, erzeugt und die Abtastpunkte der zweiten Untermenge werden mittels eines zweiten optischen Detektors des Sensorsystems, insbesondere der Empfangseinheit, erzeugt.

Die Detektoren können beispielsweise jeweils eine Fotodiode, beispielsweise genau eine Fotodiode, beinhalten. Die Fotodiode kann dabei in verschiedenen Ausführungsformen als Avalanche-Fotodiode ausgestaltet sein.

Gemäß zumindest einer Ausführungsform sind der erste und der zweite Detektor entlang der Z-Achse des Sensorkoordinatensystems oder entlang einer Achse parallel zu der Z-Achse des Sensorkoordinatensystems angeordnet. Dementsprechend ist der erste Winkel per Konstruktion gleich oder ungefähr gleich dem Nickwinkel.

Gemäß zumindest einer Ausführungsform wird mittels der Recheneinheit ein zweites Paar von Abtastpunkten identifiziert, wobei ein Punkt des zweiten Paars Teil der ersten Untermenge ist, ein weiterer Punkt des zweiten Paars Teil der zweiten Untermenge ist und eine Projektion eines zweiten Verbindungsvektors des zweiten Paars in die Sendeebene parallel zu der Longitudinalachse des Sensorsystems ist. Mittels der Recheneinheit wird ein zweiter Winkel bestimmt, den der zweite Verbindungsvektor mit der Longitudinalachse des Sensorsystems einschließt. Mittels der Recheneinheit wird ein Mittelwert abhängig von dem ersten Winkel und dem zweiten Winkel bestimmt, um die Nickwinkellage zu bestimmen. Das erste Paar unterscheidet sich insbesondere von dem zweiten Paar.

Dass der Mittelwert abhängig von dem ersten und dem zweiten Winkel bestimmt wird, kann insbesondere derart verstanden werden, dass der Mittelwert aus einer Menge von Winkeln bestimmt wird, die den ersten und den zweiten Winkel beinhaltet. Insbesondere kann der Mittelwert auch basierend auf zusätzlichen Winkeln, insbesondere Schätzwerten für den Nickwinkel, bestimmt werden. Durch die Mittelwertbildung kann eine höhere Genauigkeit der Nickwinkellage erzielt werden, insbesondere indem Zufallsfehler oder Störeinflüsse teilweise kompensiert werden.

In weiteren Ausführungsformen werden, wie für das zweite Paar beschrieben, weitere Paare identifiziert, deren Projektion der jeweiligen Verbindungsvektoren in der Sendeebene jeweils parallel zur Longitudinalachse des Sensorsystems sind. Der Mittelwert kann dann abhängig von den entsprechend bestimmten Winkeln bestimmt werden.

Gemäß zumindest einer Ausführungsform enthält die Punktwolke eine dritte Untermenge von Abtastpunkten der Fahrbahn, welche insbesondere ebenfalls einer Bodenlage entspricht. Die dritte Untermenge kann beispielsweise anhand eines dritten optischen Detektors der Empfangseinheit erzeugt werden, der beispielsweise linear bezüglich des ersten und des zweiten Detektors angeordnet ist.

Gemäß zumindest einer Ausführungsform enthält die Punktwolke eine vierte Untermenge von Abtastpunkten der Fahrbahn, welche insbesondere ebenfalls eine Bodenlage ist. Die vierte Untermenge kann beispielsweise mittels eines vierten optischen Detektors der Empfangseinheit erzeugt werden, der beispielsweise linear bezüglich des ersten, des zweiten und des dritten Detektors angeordnet ist.

Gemäß zumindest einer Ausführungsform wird mittels der Recheneinheit ein drittes Paar von Abtastpunkten identifiziert, wobei ein Punkt des dritten Paars Teil der ersten Untermenge ist, ein weiterer Punkt des dritten Paars Teil der dritten Untermenge ist und eine Projektion des dritten Verbindungsvektors des dritten Paars in die Sendeebene parallel zu der Longitudinalachse des Sensorsystems ist. Mittels der Recheneinheit wird ein dritter Winkel bestimmt, den der dritte Verbindungsvektor mit der Longitudinalachse des Sensorsystems einschließt und mittels der Recheneinheit wird der Mittelwert abhängig von dem ersten und dem dritten Winkel, beispielsweise von dem ersten, dem zweiten und dem dritten Winkel, bestimmt, um die Nickwinkellage zu bestimmen.

Gemäß zumindest einer Ausführungsform wird mittels der Recheneinheit ein viertes Paar von Abtastpunkten identifiziert, wobei ein Punkt des vierten Paars Teil der dritten Untermenge ist und ein weiterer Punkt des vierten Paars Teil der vierten Untermenge ist. Eine Projektion eines vierten Verbindungsvektors des vierten Paars in die Sendeebene ist parallel zu der Longitudinalachse des Sensorsystems. Mittels der Recheneinheit wird ein vierter Winkel bestimmt, den der vierte Verbindungsvektor mit der Longitudinalachse des Sensorsystems einschließt und der Mittelwert abhängig von dem ersten Winkel und dem vierten Winkel, insbesondere abhängig von dem ersten, dem zweiten, dem dritten und dem vierten Winkel, bestimmt, um die Nickwinkellage zu bestimmen.

Gemäß zumindest einer Ausführungsform wird mittels des Sensorsystems eine weitere Punktwolke erzeugt, die eine erste weitere Untermenge von Abtastpunkten der Fahrbahn und eine zweite weitere Untermenge von Abtastpunkten der Fahrbahn enthält, wobei die Punktwolke und die weitere Punktwolke während unterschiedlicher Zeiträume erzeugt werden. Mittels der Recheneinheit wird ein weiteres Paar von Abtastpunkten identifiziert, wobei ein Punkt des weiteren Paars Teil der ersten weiteren Untermenge ist, ein weiterer Punkt des weiteren Paars Teil der zweiten weiteren Untermenge ist und eine Projektion eines weiteren Verbindungsvektors des weiteren Paars in die Sendeebene parallel zu der Longitudinalachse des Sensorsystems ist. Mittels der Recheneinheit wird ein weiterer Winkel bestimmt, den der weitere Verbindungsvektor mit der Longitudinalachse des Sensorsystems einschließt. Mittels der Recheneinheit wird ein Mittelwert, insbesondere der Mittelwert, abhängig von dem ersten Winkel und dem weiteren Winkel bestimmt, um die Nickwinkellage zu bestimmen.

Beispielsweise kann der Mittelwert abhängig von dem ersten Winkel, dem weiteren Winkel und dem zweiten, dem dritten und/oder dem vierten Winkel bestimmt werden.

Dadurch, dass die Punktwolken während unterschiedlicher Zeiträume erzeugt werden, entsprechen sie im Allgemeinen unterschiedlichen Fahrzeugpositionen und damit unterschiedlichen Abtastpunkten auf der Fahrbahn. Dadurch können unterschiedliche externe Störeinflüsse besser berücksichtigt beziehungsweise kompensiert werden. Dies führt schlussendlich zu einer weiter erhöhten Genauigkeit der Bestimmung der Nickwinkellage.

Die verschiedenen Ausführungsformen, die bezüglich des zweiten und dritten Paars beziehungsweise der dritten und vierten Untermenge von Abtastpunkten beschrieben wurden, lassen sich direkt auf die weitere Punktwolke und entsprechende weitere dritte und vierte Untermengen von Abtastpunkten beziehungsweise weitere zweite und dritte Paare von Abtastpunkten übertragen.

Gemäß zumindest einer Ausführungsform wird die Gierwinkellage des Sensorsystems bestimmt oder bereitgestellt, beispielsweise mittels der Recheneinheit bestimmt oder der Recheneinheit bereitgestellt. Das Bestimmen der Gierwinkellage kann beispielsweise ein Abschätzen, Messen oder Vernachlässigen des Gierwinkels beinhalten.

Gemäß zumindest einer Ausführungsform wird die Punktwolke mittels des Sensorsystems in Abhängigkeit von der Gierwinkellage bestimmt.

Mit anderen Worten wird die Punktwolke mittels der Recheneinheit derart erzeugt, dass die Koordinaten der Abtastpunkte bezüglich des Gierwinkels kalibrierte oder normalisierte Koordinaten sind. Mit anderen Worten wird für die Bestimmung der Nickwinkellage nach dem verbesserten Konzept eine bezüglich des Gierwinkels kalibrierte Punktwolke herangezogen.

Gemäß zumindest einer Ausführungsform wird die weitere Punktwolke ebenfalls mittels des Sensorsystems in Abhängigkeit von der Gierwinkellage erzeugt.

Der Gierwinkel kann beispielsweise derart bestimmt werden, dass anhand zumindest zweier der mit dem ersten Detektor erzeugten Abtastpunkte ein initiales Sensorkoordinatensystem bestimmt wird. Ein Referenzkoordinatensystem kann anhand zweier entsprechender Abtastpunkte unterschiedlicher Detektoren bestimmt werden. Dabei entsprechen die beiden Abtastpunkte beispielsweise demselben Aussendewinkel. Der Gierwinkel kann durch Vergleich des initialen Sensorkoordinatensystems mit dem Referenzkoordinatensystem bestimmt werden.

Beliebige andere Verfahren zur Bestimmung des Gierwinkels können eingesetzt werden.

Insbesondere ist es nicht erforderlich, dass der Gierwinkel wie der Nickwinkel online bestimmt wird. Der Gierwinkel kann beispielsweise anhand eines vorgegebenen Kalibriertargets oder einer Kalibriervorlage in einer Testumgebung bestimmt werden.

Gemäß einem weiteren unabhängigen Aspekt des verbesserten Konzepts wird ein aktives optisches Sensorsystem zur Montage in einem Kraftfahrzeug angegeben. Das Sensorsystem weist eine Sendeeinheit, eine Empfangseinheit und eine Recheneinheit auf. Die Sendeeinheit ist dazu eingerichtet, Licht in eine Umgebung des Sensorsystems auszusenden. Die Empfangseinheit ist dazu eingerichtet, reflektierte Anteile des Lichts zu detektieren und basierend auf den detektierten reflektierten Anteilen wenigstens ein Sensorsignal zu erzeugen. Die Recheneinheit ist mit der Empfangseinheit gekoppelt, um das wenigstens eine Sensorsignal zu empfangen. Die Recheneinheit ist dazu eingerichtet, basierend auf dem wenigstens einen Sensorsignal eine Punktwolke zu erzeugen, die eine erste Untermenge von Abtastpunkten einer Fahrbahn, auf welcher sich das Kraftfahrzeug befindet, und eine zweite Untermenge von Abtastpunkten der Fahrbahn enthält. Die Recheneinheit ist dazu eingerichtet, ein erstes Paar von Abtastpunkten zu identifizieren, wobei ein Punkt des ersten Paars Teil der ersten Untermenge ist, ein weiterer Punkt des ersten Paars Teil der zweiten Untermengen ist und eine Projektion eines ersten Verbindungsvektors des ersten Paars in eine Sendeebene des Sensorsystems parallel zu einer Longitudinalachse des Sensorsystems ist. Die Recheneinheit ist dazu eingerichtet, einen ersten Winkel zu bestimmen, den der erste Verbindungsvektor mit der Longitudinalachse des Sensorsystems einschließt, um eine Nickwinkellage des Sensorsystems zu bestimmen.

Das Sensorsystem ist insbesondere als Lidarsystem ausgebildet.

Die Sendeeinheit beinhaltet insbesondere eine Laserquelle, beispielsweise einen Halbleiterlaser, insbesondere einen Infrarotlaser.

Gemäß zumindest einer Ausführungsform des aktiven optischen Sensorsystems weist die Empfangseinheit einen ersten optischen Detektor auf, insbesondere eine erste Fotodiode, beispielsweise eine erste Avalanche-Fotodiode, wobei der erste optische Detektor dazu eingerichtet ist, erste reflektierte Anteile des Lichts zu detektieren und basierend darauf ein erstes Sensorsignal des wenigstens einen Sensorsignals zu erzeugen. Die Empfangseinheit weist einen zweiten optischen Detektor auf, insbesondere eine zweite Fotodiode, beispielsweise eine zweite Avalanche-Fotodiode, wobei der zweite optische Detektor dazu eingerichtet ist, zweite reflektierte Anteile des Lichts zu detektieren und basierend darauf ein zweites Sensorsignal des wenigstens einen Sensorsignals zu erzeugen. Die Recheneinheit ist dazu eingerichtet, die erste Untermenge basierend auf dem ersten Sensorsignal zu erzeugen und die zweite Untermenge basierend auf dem zweiten Sensorsignal zu erzeugen.

Die ersten reflektierten Anteile und die zweiten reflektierten Anteile sind dabei insbesondere jeweils Bestandteil der reflektierten Anteile des Lichts, die von der Empfangseinheit detektiert werden.

Gemäß zumindest einer Ausführungsform sind der erste optische Detektor und der zweite optische Detektor entlang der Normalachse oder entlang einer Achse parallel zur Normalachse des Sensorsystems angeordnet.

Insbesondere unterscheiden sich räumliche Positionen der optischen Detektoren im Sensorkoordinatensystem nur durch ihre Z-Koordinaten.

Gemäß zumindest einer Ausführungsform ist die Recheneinheit dazu eingerichtet, ein zweites Paar von Abtastpunkten zu identifizieren, wobei ein Punkt des zweiten Paars Teil der der ersten Untermenge ist, ein weiterer Punkt des zweiten Paars Teil der zweiten Untermenge ist und eine Projektion eines zweiten Verbindungsvektors des zweiten Paars in die Sendeebene parallel zu der Longitudinalachse des Sensorsystems ist. Die Recheneinheit ist dazu eingerichtet, einen zweiten Winkel zu bestimmen, den der zweite Verbindungsvektor mit der Longitudinalachse des Sensorsystems einschließt, und einen Mittelwert abhängig von dem ersten Winkel und dem zweiten Winkel zu bestimmen, um die Nickwinkellage zu bestimmen.

Gemäß zumindest einer Ausführungsform ist die Recheneinheit dazu eingerichtet, basierend auf dem wenigstens einen Sensorsignal eine weitere Punktwolke zu erzeugen, die eine weitere erste Untermenge von Abtastpunkten der Fahrbahn und eine weitere zweite Untermenge von Abtastpunkten der Fahrbahn enthält, wobei die Punktwolke und die weitere Punktwolke während unterschiedlicher Zeiträume erzeugt werden. Die Recheneinheit ist dazu eingerichtet, ein weiteres Paar von Abtastpunkten zu identifizieren, wobei ein Punkt des weiteren Paars Teil der ersten weiteren Untermenge ist, ein weiterer Punkt des weiteren Paars Teil der zweiten weiteren Untermenge ist und eine Projektion eines weiteren Verbindungsvektors des weiteren Paars in die Sendeebene parallel zu der Longitudinalachse des Sensorsystems ist. Die Recheneinheit ist dazu eingerichtet, einen weiteren Winkel zu bestimmen, den der weitere Verbindungsvektor mit der Longitudinalachse des Sensorsystems einschließt und einen Mittelwert abhängig von dem ersten Winkel und dem weiteren Winkel zu bestimmen, um die Nickwinkellage zu bestimmen.

Gemäß zumindest einer Ausführungsform ist die Recheneinheit dazu eingerichtet, die Punktwolke in Abhängigkeit von einer Gierwinkellage des Sensorsystems zu erzeugen.

Weitere Ausführungsformen des aktiven optischen Sensorsystems nach dem verbesserten Konzept ergeben sich direkt aus den verschiedenen Ausgestaltungen des Verfahrens nach dem verbesserten Konzept und umgekehrt. Insbesondere kann das aktive optische Sensorsystem dazu eingerichtet oder programmiert sein, ein Verfahren nach dem verbesserten Konzept durchzuführen oder das Sensorsystem nach dem verbesserten Konzept führt ein Verfahren nach dem verbesserten Konzept durch.

Gemäß einem weiteren unabhängigen Aspekt des verbesserten Konzepts wird ein Kraftfahrzeug mit einem aktiven optischen Sensorsystem gemäß dem verbesserten Konzept angegeben.

Gemäß einem weiteren unabhängigen Aspekt des verbesserten Konzepts wird ein Computerprogramm mit Befehlen angegeben. Bei Ausführung des Computerprogramms durch ein aktives optisches Sensorsystem nach dem verbesserten Konzept, insbesondere durch die Recheneinheit des Sensorsystems, veranlassen die Befehle das Sensorsystem dazu, ein Verfahren nach dem verbesserten Konzept durchzuführen.

Gemäß einem weiteren unabhängigen Aspekt des verbesserten Konzepts wird ein computerlesbares Speichermedium angegeben, auf welchem ein Computerprogramm nach dem verbesserten Konzept gespeichert ist.

Weitere Merkmale der Erfindung ergeben sich aus den Ansprüchen, den Figuren und der Figurenbeschreibung.

In den Fig. zeigen:
- Fig. 1: ein Kraftfahrzeug mit einer schematischen Darstellung einer beispielhaften Ausführungsform eines aktiven optischen Sensorsystems nach dem verbesserten Konzept;
- Fig. 2: eine Sendeeinheit einer beispielhaften Ausführungsform eines aktiven optischen Sensorsystems nach dem verbesserten Konzept;
- Fig. 3: eine Empfangseinheit einer weiteren beispielhaften Ausführungsform eines aktiven optischen Sensorsystems nach dem verbesserten Konzept;
- Fig. 4: eine schematische Darstellung einer Punktwolke in einer beispielhaften Ausführungsform eines Verfahrens nach dem verbesserten Konzept;
- Fig. 5: eine weitere Darstellung der Punktwolke aus Fig. 4;
- Fig. 6: eine weitere Darstellung der Punktwolke aus Fig. 4 und Fig. 5; und
- Fig. 7: eine weitere Darstellung der Punktwolke aus Fig. 4, Fig. 5 und Fig. 6.

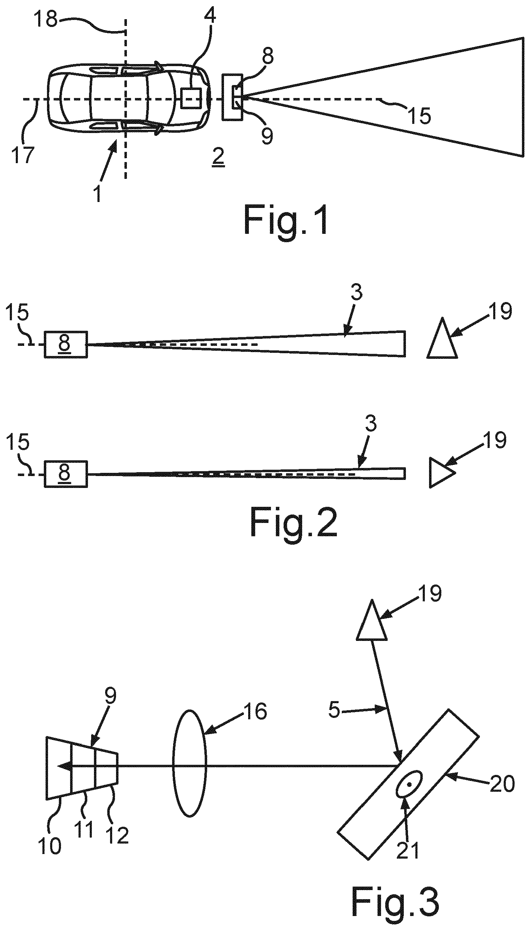

In Fig. 1 ist ein Kraftfahrzeug 1 gezeigt, welches ein aktives optisches Sensorsystem 2 nach dem verbesserten Konzept aufweist.

Das Sensorsystem 2 ist als Lidarsystem ausgebildet. Eine nominale Ausrichtung des Sensorsystems 2 ist beispielsweise gegeben durch eine Longitudinalachse 17 des Kraftfahrzeugs 1, eine Querachse 18 des Kraftfahrzeugs 1 sowie eine (nicht dargestellte) Normalachse des Kraftfahrzeugs 1, welche senkrecht auf dessen Longitudinal- und Querachse 17, 18 steht.

In der Draufsicht der Fig. 1 ist eine Projektion einer Longitudinalachse 15 des Sensorsystems 2 in die durch die Longitudinalachse 17 und die Querachse 18 des Kraftfahrzeugs 1 aufgespannte Ebene dargestellt. Es wird insbesondere angenommen, dass die Longitudinalachse 15 des Sensorsystems 2 in einer durch die Longitudinalachse 17 des Kraftfahrzeugs 1 und die Normalachse des Kraftfahrzeugs 1 aufgespannte Ebene liegt, sodass die Projektion der Longitudinalachse 15 des Sensorsystems 2 parallel zu der Longitudinalachse 17 des Kraftfahrzeugs 1 ist. Diese Annahme stellt keine Beschränkung der Allgemeinheit dar, da davon ausgegangen wird, dass eine Gierwinkelkompensation bereits vorab durchgeführt wurde oder der Gierwinkel des Sensorsystems bezüglich der nominalen Ausrichtung näherungsweise gleich Null ist.

Das Sensorsystem 2 weist eine Sendeeinheit 8 auf, beispielsweise mit einer Laserquelle, um Licht mit verschiedenen Aussendewinkeln innerhalb einer Sendeebene des Sensorsystems 2 auszusenden. Dementsprechend ist die Aussenderichtung bei einem Aussendewinkel von Null Grad gleich der Longitudinalachse 15 des Sensorsystems 2.

Die Sendeebene ist insbesondere definiert durch die Ebene, welche durch die Longitudinalachse 15 des Sensorsystems 2 und eine Querachse des Sensorsystems 2 aufgespannt wird. Die Querachse des Sensorsystems 2 kann dabei ohne Beschränkung der Allgemeinheit als identisch oder parallel zur Querachse 18 des Kraftfahrzeugs 1 angesehen werden. Abweichungen der Querachse des Sensorsystems 2 von der Querachse des Kraftfahrzeugs 1 entsprechen einem Rollwinkel des Sensorsystems 2, der von Null verschieden ist. Die im Folgenden beschriebenen Verfahrensschritte zur Bestimmung eines Nickwinkels des Sensorsystems 2 sind jedoch unabhängig von dem Rollwinkel.

Die Sendeebene entspricht also der Ebene, die durch die Longitudinalachse 17 des Kraftfahrzeugs 1 und die Querachse 18 des Kraftfahrzeugs 1 aufgespannt wird, rotiert um einen Winkel, nämlich den Nickwinkel, um die Querachse 18 des Kraftfahrzeugs 1.

Mit anderen Worten schließt die Longitudinalachse 15 des Sensorsystems 2 mit der Longitudinalachse 17 des Kraftfahrzeugs 1 den Nickwinkel ein.

Das aktive optische Sensorsystems 2 weist außerdem eine Recheneinheit 4 auf, sowie eine Empfangseinheit 9. Die Recheneinheit 4 ist mit der Empfangseinheit 9 und beispielsweise mit der Sendeeinheit 8 verbunden. Insbesondere kann die Recheneinheit 4 die Sendeeinheit 8 ansteuern, um das Licht 3 auszusenden. Die Empfangseinheit 9 kann reflektierte Anteile 5 des Lichts 3 detektieren und basierend darauf wenigstens ein Sensorsignal erzeugen und an die Recheneinheit 4 übermitteln.

In Fig. 2 ist schematisch die Sendeeinheit 8 des Sensorsystems 2 gezeigt. Außerdem ist von der Sendeeinheit 8 ausgesandtes Licht 3, insbesondere Laserstrahlen, gezeigt. Zudem ist in Fig. 2 schematisch ein Objekt 19 in einer Umgebung des Sensorsystems 2 dargestellt.

Die obere Abbildung in Fig. 2 entspricht beispielsweise einer Blickrichtung parallel zu der Querachse 18 des Kraftfahrzeugs 1 auf die Sendeeinheit 8 und die untere Abbildung in Fig. 2 entspricht beispielsweise einer Blickrichtung parallel zu der Normalachse des Sensorsystems 2 auf die Sendeeinheit 8.

Wie in den Abbildungen der Fig. 2 erkennbar ist, kann eine jeweilige Strahlaufweitung der Laserstrahlen in unterschiedlichen Ebenen unterschiedlich ausfallen.

In Fig. 3 sind schematisch die Empfangseinheit 9, eine Linse 16 sowie ein Spiegel 20 des Sensorsystems 2 gezeigt.

Die Empfangseinheit 9 beinhaltet wenigstens zwei, im Beispiel der Fig. 3 drei, optische Detektoren 10, 11, 12, die insbesondere nebeneinander linear entlang einer Achse parallel zur Normalachse des Sensorsystems 2 angeordnet sind und beispielsweise als Avalanche-Fotodioden ausgestaltet sind. Die Empfangseinheit 9 weist außerdem eine Welle 21 auf, die drehbar gelagert und mit dem Spiegel 20 verbunden ist, sodass der Spiegel 20 um die Drehachse drehbar ist.

Die Ansicht der Fig. 3 kann beispielsweise als Draufsicht, also gemäß einer Blickrichtung parallel zur Normalachse des Sensorsystems 2, auf das Sensorsystem 2 verstanden werden. Die Detektoren 10, 11, 12 sind zu Zwecken der Verdeutlichung perspektivisch verzerrt dargestellt. In einer tatsächlichen Draufsicht würden die Detektoren 10, 11, 12 übereinanderliegen und sich beispielsweise gegenseitig verdecken.

Die Sendeeinheit 8 ist in Fig. 3 nicht dargestellt, kann jedoch bezüglich des Spiegels 20 derart angeordnet sein, dass bei Rotation des Spiegels 20 um die Drehachse der Aussendewinkel des Lichts 3 variiert werden kann. Die Drehachse und die Welle 21 sind also insbesondere senkrecht zu der Sendeebene ausgerichtet.

Ein Empfangspfad für die reflektierten Anteile 5 der Lichtstrahlen 3, welche beispielsweise von dem Objekt 19 reflektiert wurden, führt über den Spiegel 20 und die Linse 16 zu der Empfangseinheit 9. Die reflektierten Anteile 5 werden dann von mindestens einem der Detektoren 10, 11, 12 erfasst.

Durch die Rotation des Spiegels 20 um die Drehachse kann jeder der Detektoren 10, 11, 12 aus unterschiedlichen Richtungen einfallende reflektierte Anteile 5 des Lichts 3 detektieren. Die Momentanposition des Spiegels 20 kann dabei beispielsweise über einen mit der Welle 21 gekoppelten Drehgeber (nicht dargestellt) bestimmt werden.

Indem die Momentanposition des Spiegels 20 beispielsweise zu jedem Zeitpunkt bekannt ist, kann über die zeitliche Abfolge der detektierten Lichtstrahlen eine Menge von Abtastpunkten, die auch als Punktwolke 6 bezeichnet wird, erzeugt werden. Dabei wird mittels jedes Detektors 10, 11, 12 eine Untermenge der Abtastpunkte beziehungsweise eine Untermenge der Punktwolke 6 erzeugt. Eine Untermenge von Abtastpunkten, die für unterschiedliche Aussendewinkel oder Winkelpositionen des Spiegels 20, und entsprechend für unterschiedliche Zeitpunkte, erzeugt werden, kann auch als Lage von Abtastpunkten bezeichnet werden. Handelt es sich bei dem Objekt 19 um eine Fahrbahn, auf der sich das Kraftfahrzeug 1 befindet, wird die Lage auch als Bodenlage oder Ground Layer bezeichnet.

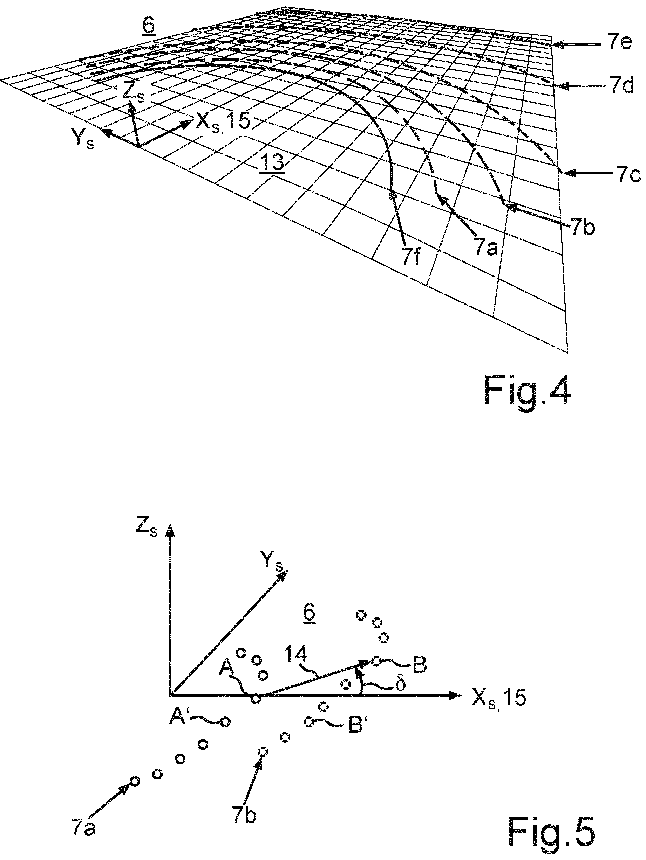

Die Punktwolke 6 ist beispielhaft in Fig. 4 dargestellt und ist insbesondere eine dreidimensionale Punktwolke, da neben den jeweiligen Aussendewinkeln und den Informationen darüber, auf welchen Detektor 10, 11, 12 der jeweilige Abtastpunkt zurückgeht, auch der Abstand des Objekts 19 über eine Lichtlaufzeitmessung bestimmt werden kann.

Unterschiedliche Lagen der Punktwolke 7a, 7b, 7c, 7d, 7e, 7f sind in Fig. 4 mit unterschiedlichen Strichtypen dargestellt. Die gezeigten Abtastpunkte der Punktwolke 6 wurden beispielsweise basierend auf reflektierten Anteilen des Lichts 3, welche von der Fahrbahn 13 reflektiert wurden, erzeugt. Bei den Lagen 7a, 7b, 7c, 7d, 7e, 7f handelt es sich dementsprechend um Bodenlagen. Weitere Lagen der Punktwolke 6, die möglicherweise vorhanden sind und keine Bodenlagen darstellen, sind der Übersichtlichkeit halber nicht gezeigt. In Fig. 4 sind beispielhaft insgesamt sechs Lagen 7a, 7b, 7c, 7d, 7e, 7f dargestellt, sodass die Empfangseinheit 9 in diesem Fall wenigstens sechs Detektoren aufweist.

Außerdem ist in Fig. 4 das Sensorkoordinatensystem gezeigt. Eine X-Achse X_{S} des Sensorkoordinatensystems entspricht der Longitudinalachse 15 des Sensorsystems 2, eine Y-Achse Y_{S} entspricht der Querachse des Sensorsystems 2 und eine Z-Achse Z_{S} entspricht der Normalachse des Sensorsystems 2.

In Fig. 5 sind zwei der Bodenlagen 7a, 7b in dem Sensorkoordinatensystem gezeigt. Zu Darstellungszwecken sind lediglich einige Abtastpunkte der Lagen 7a, 7b dargestellt. Um eine Nickwinkellage des Sensorsystems 2 nach dem verbesserten Konzept zu bestimmen, identifiziert die Recheneinheit 4 einen Punkt A der ersten Bodenlage 7a sowie einen Punkt B der zweiten Bodenlage 7b. In Fig. 5 ist ein Verbindungsvektor 14 gezeigt, der von dem Punkt A zu dem Punkt B führt.

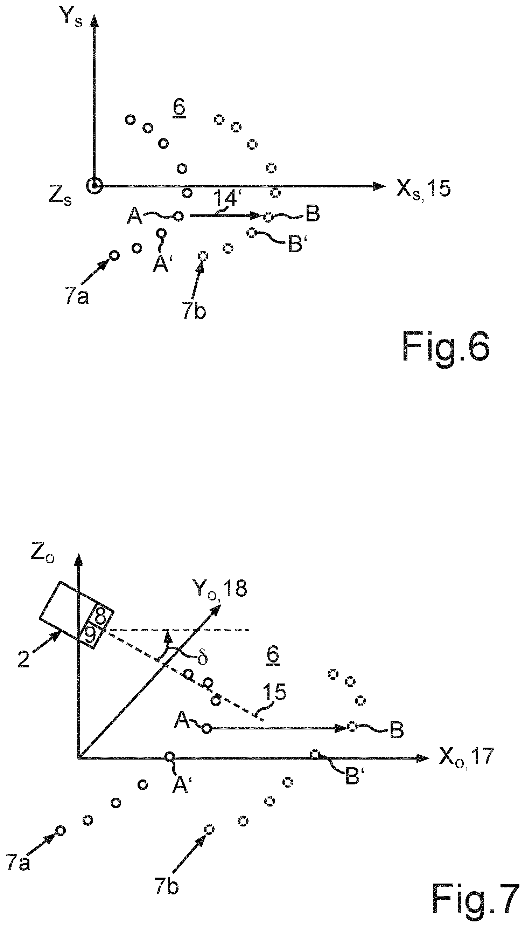

In Fig. 6 ist dieselbe Situation wie in Fig. 5 dargestellt, jedoch aus einer Blickrichtung parallel zur Z-Achse Z_{S}. Hier ist eine Projektion 14' des Verbindungsvektors 14 in die X_{S}-Y_{S}-Ebene gezeigt. Die Identifizierung der Punkte A, B durch die Recheneinheit 4 erfolgt derart, dass die Projektion 14 parallel oder näherungsweise parallel zu der Longitudinalachse 15 des Sensorsystems 2, also zu der X_{S}-Achse ist.

In Fig. 7 ist dieselbe Situation wie in Fig. 5 und Fig. 6 ebenfalls dargestellt, jedoch in dem Fahrzeugkoordinatensystem, welches eine X-Achse X₀, eine Y-Achse Y₀ und eine Z-Achse Z₀ aufweist. Die X-Achse X₀ entspricht dabei der Longitudinalachse 17 des Kraftfahrzeugs 1, die Y-Achse Y₀ der Querachse 18 des Kraftfahrzeugs 1 und die Z-Achse Z₀ der Normalachse des Kraftfahrzeugs 1.

In Fig. 7 ist außerdem schematisch das Sensorsystem 2 mit der Sendeeinheit 8 und der Empfangseinheit 9 dargestellt, sowie die Longitudinalachse 15 des Sensorsystems 2. Wie oben erläutert, schließen die Longitudinalachse 15 des Sensorsystems 2 und die Longitudinalachse 17 des Kraftfahrzeugs 1 einen Winkel ein, der dem Nickwinkel δ entspricht.

Es kann in der Regel mit hoher Genauigkeit angenommen werden, dass es sich bei der Fahrbahn 13 um eine näherungsweise ebene Oberfläche handelt. Zudem ist die Ebene, die durch die Longitudinalachse 17 des Kraftfahrzeugs 1 und die Querachse 18 des Kraftfahrzeugs 1 aufgespannt wird, parallel zu der Oberfläche der Fahrbahn 13. Dementsprechend folgt, dass der Verbindungsvektor 14 mit der X₀-Y₀-Ebene des Fahrzeugkoordinatensystems keinen Winkel einschließt, also näherungsweise parallel zu dieser Ebene ist. Mit anderen Worten schließt der Verbindungsvektor 14 mit der X_{S}-Y_{S}-Ebene des Sensorkoordinatensystems, insbesondere mit der X_{S}-Richtung des Sensorkoordinatensystems oder der Longitudinalachse 15 des Sensorsystems 2, denselben Winkel δ ein, wie die Longitudinalachse 15 des Sensorsystems 2 mit der Longitudinalachse 17 des Kraftfahrzeugs 1.

Der Nickwinkel kann also mittels der Recheneinheit 4 näherungsweise als derjenige Winkel bestimmt werden, den der Verbindungsvektor 14 mit der X_{S}-Achse einschließt. Insbesondere ist der Nickwinkel δ gegeben durch δ = arctan([Z_{B} - Z_{A}]/[X_{B} - X_{A}]), wobei X_{A} die X-Koordinate des Punkts A, Z_{A} dessen Z-Koordinate, X_{B} die X-Koordinate des Punkts B und Z_{B} dessen Z-Koordinate bezeichnen.

Die beschriebenen Schritte zur Bestimmung des Nickwinkels δ können zu für unterschiedliche Paare von Abtastpunkten der verschiedenen Bodenlagen 7a, 7b, 7c, 7d, 7e, 7f wiederholt werden. Die bestimmten Winkelwerte können beispielsweise gemittelt werden, um eine höhere Genauigkeit zu erzielen.

Als Beispiel ist in den Fig. 5, Fig. 6 und Fig. 7 ein weiteres Paar von Abtastpunkten A', B' gezeigt, deren Verbindungsvektor ebenfalls näherungsweise in der X_{S}-Z_{S}-Achse des Sensorkoordinatensystems liegt. Entsprechend kann auch hier der Nickwinkel in der beschriebenen Weise bestimmt werden.

Die beschriebenen Schritte können beispielsweise zu unterschiedlichen Zeitpunkt wiederholt werden, um eine weitere Erhöhung der Genauigkeit zu erzielen.

Durch das verbesserte Konzept wird eine Möglichkeit zur Bestimmung der Nickwinkellage eines aktiven optischen Sensorsystems angegeben, die eine erhöhte Genauigkeit ermöglicht. Ein Vorteil des verbesserten Konzepts ist, dass die Einbauhöhe des Sensorsystems in dem Kraftfahrzeug nicht bekannt sein muss, was entsprechende Ungenauigkeiten und resultierende Messfehler ausschließt. Nachdem die zum Bestimmen der Nickwinkellage herangezogenen Bodenlagen während des Betriebs des Fahrzeugs in der Regel ständig vorhanden sind, kann die Anzahl der möglichen Messungen zum Bestimmen der Nickwinkellage stark erhöht werden, was eine signifikante Erhöhung der Genauigkeit der Bestimmung der Nickwinkellage zur Folge hat.

Das verbesserte Konzept nutzt es insbesondere aus, dass bei einem Nickwinkel, wie er realistischer Weise zu erwarten ist, stets mehrere Bodenlagen in der entsprechenden Punktwolke vorhanden sind.

## Patentansprüche

1. Verfahren zum Bestimmen einer Nickwinkellage eines aktiven optischen Sensorsystems (2), das an einem Kraftfahrzeug (1) montiert ist, welches sich auf einer Fahrbahn (13) befindet, wobei
- mittels des Sensorsystems (2) eine Punktwolke (6) erzeugt wird, die eine erste Untermenge (7a) von Abtastpunkten der Fahrbahn (13) und eine zweite Untermenge (7b) von Abtastpunkten der Fahrbahn (13) enthält; **dadurch gekennzeichnet, dass**
- mittels einer Recheneinheit (4) des Sensorsystems (2) ein erstes Paar (A, B) von Abtastpunkten identifiziert wird, wobei ein Punkt (A) des ersten Paars (A, B) Teil der ersten Untermenge (7a) ist, ein weiterer Punkt (B) des ersten Paars (A, B) Teil der zweiten Untermenge (7b) ist und eine Projektion (14') eines ersten Verbindungsvektors (14) des ersten Paars (A, B) in eine Sendeebene des Sensorsystems (2) parallel zu einer Longitudinalachse (15) des Sensorsystems (2) ist; und
- mittels der Recheneinheit (4) ein erster Winkel (δ) bestimmt wird, den der erste Verbindungsvektor (14) mit der Longitudinalachse (15) des Sensorsystems (2) einschließt, um die Nickwinkellage zu bestimmen.

2. Verfahren nach Anspruch 1,
**dadurch gekennzeichnet, dass** zum Erzeugen der Punktwolke (6)
- Licht (3) mittels einer Sendeeinheit (8) des Sensorsystems (2) in eine Umgebung des Sensorsystems (2) ausgesendet wird;
- reflektierte Anteile (5) des Lichts (3) von einer Empfangseinheit (9) des Sensorsystems (2) detektiert werden;
- wenigstens ein Sensorsignal mittels der Empfangseinheit (9) basierend auf den detektierten reflektierten Anteilen (5) erzeugt wird; und
- die Punktwolke (6) mittels der Recheneinheit (4) basierend auf dem wenigstens einen Sensorsignal erzeugt wird.

3. Verfahren nach einem der Ansprüche 1 oder 2,
**dadurch gekennzeichnet, dass**
- die Abtastpunkte der ersten Untermenge (7a) mittels eines ersten optischen Detektors (10) des Sensorsystems (2) erzeugt werden; und
- die Abtastpunkte der zweiten Untermenge (7b) mittels eines zweiten optischen Detektors (11) des Sensorsystems (2) erzeugt werden.

4. Verfahren nach einem der Ansprüche 1 bis 3,
**dadurch gekennzeichnet, dass**
- mittels der Recheneinheit (4) ein zweites Paar (A', B') von Abtastpunkten identifiziert wird, wobei ein Punkt (A') des zweiten Paars (A', B') Teil der ersten Untermenge (7a) ist, ein weiterer Punkt (B') des zweiten Paars (A', B') Teil der zweiten Untermenge (7b) ist und eine Projektion eines zweiten Verbindungsvektors des zweiten Paars in die Sendeebene parallel zu der Longitudinalachse (15) des Sensorsystems (2) ist;
- mittels der Recheneinheit (4) ein zweiter Winkel bestimmt wird, den der zweite Verbindungsvektor mit der Longitudinalachse (15) des Sensorsystems einschließt; und
- mittels der Recheneinheit (4) ein Mittelwert abhängig von dem ersten Winkel (δ) und dem zweiten Winkel bestimmt wird, um die Nickwinkellage zu bestimmen.

5. Verfahren nach einem der Ansprüche 1 bis 4,
**dadurch gekennzeichnet, dass**
- mittels des Sensorsystems (2) eine weitere Punktwolke erzeugt wird, die eine erste weitere Untermenge von Abtastpunkten der Fahrbahn (13) und eine zweite weitere Untermenge von Abtastpunkten der Fahrbahn (13) enthält, wobei die Punktwolke (6) und die weitere Punktwolke während unterschiedlicher Zeiträume erzeugt werden;
- mittels der Recheneinheit (4) ein weiteres Paar von Abtastpunkten identifiziert wird, wobei ein Punkt des weiteren Paars Teil der ersten weiteren Untermenge ist, ein weiterer Punkt des weiteren Paars Teil der zweiten weiteren Untermenge ist und eine Projektion eines weiteren Verbindungsvektors des weiteren Paars in die Sendeebene parallel zu der Longitudinalachse (15) des Sensorsystems (2) ist;
- mittels der Recheneinheit (4) ein weiterer Winkel bestimmt wird, den der weitere Verbindungsvektor mit der Longitudinalachse (15) des Sensorsystems (2) einschließt; und
- mittels der Recheneinheit (4) ein Mittelwert abhängig von dem ersten Winkel (δ) und dem weiteren Winkel bestimmt wird, um die Nickwinkellage zu bestimmen.

6. Verfahren nach einem der Ansprüche 1 bis 5,
**dadurch gekennzeichnet, dass**
die Punktwolke (6) mittels des Sensorsystems (2) in Abhängigkeit von einer Gierwinkellage des Sensorsystems (2) erzeugt wird.

7. Aktives optisches Sensorsystem zur Montage an einem Kraftfahrzeug (1), aufweisend
- eine Sendeeinheit (8), dazu eingerichtet, Licht (3) in eine Umgebung des Sensorsystems (2) auszusenden;
- eine Empfangseinheit (9), dazu eingerichtet, reflektierte Anteile (5) des Lichts (3) zu detektieren und basierend auf den detektierten reflektierten Anteilen (5) wenigstens ein Sensorsignal zu erzeugen; und
- eine Recheneinheit (4), die mit der Empfangseinheit (8) gekoppelt ist, um das wenigstens eine Sensorsignal zu empfangen;
wobei die Recheneinheit (4) dazu eingerichtet ist,
- basierend auf dem wenigstens einen Sensorsignal eine Punktwolke (6) zu erzeugen, die eine erste Untermenge (7a) von Abtastpunkten einer Fahrbahn (13), auf welcher sich das Kraftfahrzeug (1) befindet, und eine zweite Untermenge (7b) von Abtastpunkten der Fahrbahn (13) enthält; **dadurch gekennzeichnet, dass** die Recheneinheit weiterhin dazu eingerichtet ist,
- ein erstes Paar (A, B) von Abtastpunkten zu identifizieren, wobei ein Punkt (A) des ersten Paars (A, B) Teil der ersten Untermenge (7a) ist, ein weiterer Punkt (B) des ersten Paars (A, B) Teil der zweiten Untermenge (7b) ist und eine Projektion (14') eines ersten Verbindungsvektors (14) des ersten Paars (A, B) in eine Sendeebene des Sensorsystems (2) parallel zu einer Longitudinalachse (15) des Sensorsystems (2) ist; und
- einen ersten Winkel (δ) zu bestimmen, den der erste Verbindungsvektor (14) mit der Longitudinalachse (15) des Sensorsystems (2) einschließt, um eine Nickwinkellage des Sensorsystems (2) zu bestimmen.

8. Aktives optisches Sensorsystem nach Anspruch 7,
**dadurch gekennzeichnet, dass**
- die Empfangseinheit (9) einen ersten optischen Detektor (10) aufweist, dazu eingerichtet, erste reflektierte Anteile des Lichts (3) zu detektieren und basierend darauf ein erstes Sensorsignal des wenigstens einen Sensorsignals zu erzeugen;
- die Empfangseinheit (9) einen zweiten optischen Detektor (11) aufweist, dazu eingerichtet, zweite reflektierte Anteile des Lichts (3) zu detektieren und basierend darauf ein zweites Sensorsignal des wenigstens einen Sensorsignals zu erzeugen; und
- die Recheneinheit (4) dazu eingerichtet ist, die erste Untermenge (7a) basierend auf dem ersten Sensorsignal zu erzeugen und die zweite Untermenge (7b) basierend auf dem zweiten Sensorsignal zu erzeugen.

9. Aktives optisches Sensorsystem nach Anspruch 8,
**dadurch gekennzeichnet, dass**
der erste optische Detektor (10) und der zweite optische Detektor (11) entlang einer Richtung parallel zu einer Normalachse des Sensorsystems (2) angeordnet sind.

10. Aktives optisches Sensorsystem nach einem der Ansprüche 7 bis 9,
**dadurch gekennzeichnet, dass** die Recheneinheit (4) dazu eingerichtet ist,
- ein zweites Paar (A', B') von Abtastpunkten zu identifizieren, wobei ein Punkt (A') des zweiten Paars (A', B') Teil der ersten Untermenge (7a) ist, ein weiterer Punkt (B') des zweiten Paars (A', B') Teil der zweiten Untermenge (7b) ist und eine Projektion eines zweiten Verbindungsvektors des zweiten Paars in die Sendeebene parallel zu der Longitudinalachse (15) des Sensorsystems ist;
- einen zweiten Winkel zu bestimmen, den der zweite Verbindungsvektor mit der Longitudinalachse (15) des Sensorsystems (2) einschließt; und
- einen Mittelwert abhängig von dem ersten Winkel (δ) und dem zweiten Winkel zu bestimmen, um die Nickwinkellage zu bestimmen.

11. Aktives optisches Sensorsystem nach einem der Ansprüche 7 bis 10,
**dadurch gekennzeichnet, dass** die Recheneinheit (4) dazu eingerichtet ist,
- basierend auf dem wenigstens einen Sensorsignal eine weitere Punktwolke zu erzeugen, die eine erste weitere Untermenge von Abtastpunkten der Fahrbahn (13) und eine zweite weitere Untermenge von Abtastpunkten der Fahrbahn (13) enthält, wobei die Punktwolke (6) und die weitere Punktwolke während unterschiedlicher Zeiträume erzeugt werden;
- ein weiteres Paar von Abtastpunkten zu identifizieren, wobei ein Punkt des weiteren Paars Teil der ersten weiteren Untermenge ist, ein weiterer Punkt des weiteren Paars Teil der zweiten weiteren Untermenge ist und eine Projektion eines weiteren Verbindungsvektors des weiteren Paars in die Sendeebene parallel zu der Longitudinalachse (15) des Sensorsystems ist;
- einen weiteren Winkel zu bestimmen, den der weitere Verbindungsvektor mit der Longitudinalachse des Sensorsystems (2) einschließt; und
- einen Mittelwert abhängig von dem ersten Winkel (δ) und dem weiteren Winkel zu bestimmen, um die Nickwinkellage zu bestimmen.

12. Aktives optisches Sensorsystem nach einem der Ansprüche 7 bis 11,
**dadurch gekennzeichnet, dass**
die Recheneinheit (14) dazu eingerichtet ist, die Punktwolke (6) in Abhängigkeit von einer Gierwinkellage des Sensorsystems (2) zu erzeugen.

13. Kraftfahrzeug mit einem aktiven optischen Sensorsystem (2) nach einem der Ansprüche 7 bis 12.

14. Computerprogramm mit Befehlen, die bei Ausführung des Computerprogramms durch ein aktives optisches Sensorsystem (2) nach einem der Ansprüche 7 bis 12, das Sensorsystem (2) dazu veranlassen, ein Verfahren nach einem der Ansprüche 1 bis 6 durchzuführen.

15. Computerlesbares Speichermedium, auf welchem ein Computerprogramm nach Anspruch 14 gespeichert ist.

## Claims

1. Method for determining a pitch angle position of an active optical sensor system (2), which is mounted on a motor vehicle (1) located on a roadway (13),
wherein
- a point cloud (6) containing a first subset (7a) of scanning points of the roadway (13) and a second subset (7b) of scanning points of the roadway (13) is generated by means of the sensor system (2); **characterized in that**
- a first pair (A, B) of scanning points is identified by means of a computation unit (4) of the sensor system (2), wherein one point (A) of the first pair (A, B) is part of the first subset (7a), a further point (B) of the first pair (A, B) is part of the second subset (7b), and a projection (14') of a first connection vector (14) of the first pair (A, B) into a transmission plane of the sensor system (2) is parallel to a longitudinal axis (15) of the sensor system (2); and
- a first angle (δ), which the first connection vector (14) encloses with the longitudinal axis (15) of the sensor system (2), is determined by means of the computation unit (4) in order to determine the pitch angle position.

2. Method according to Claim 1,
**characterized in that**, for generating the point cloud (6),
- light (3) is emitted into a surrounding area of the sensor system (2) by means of a transmission unit (8) of the sensor system (2);
- reflected components (5) of the light (3) are detected by a reception unit (9) of the sensor system (2);
- at least one sensor signal is generated by means of the reception unit (9) based on the detected reflected components (5); and
- the point cloud (6) is generated by means of the computation unit (4) based on the at least one sensor signal.

3. Method according to either of Claims 1 and 2,
**characterized in that**
- the scanning points of the first subset (7a) are generated by means of a first optical detector (10) of the sensor system (2); and
- the scanning points of the second subset (7b) are generated by means of a second optical detector (11) of the sensor system (2).

4. Method according to one of Claims 1 to 3,
**characterized in that**
- a second pair (A', B') of scanning points is identified by means of the computation unit (4), wherein one point (A') of the second pair (A', B') is part of the first subset (7a), a further point (B') of the second pair (A', B') is part of the second subset (7b), and a projection of a second connection vector of the second pair into the transmission plane is parallel to the longitudinal axis (15) of the sensor system (2);
- a second angle, which the second connection vector encloses with the longitudinal axis (15) of the sensor system, is determined by means of the computation unit (4); and
- a mean value is determined by means of the computation unit (4) as a function of the first angle (δ) and the second angle in order to determine the pitch angle position.

5. Method according to one of Claims 1 to 4,
**characterized in that**
- the sensor system (2) is used to generate a further point cloud, which contains a first further subset of scanning points of the roadway (13) and a second further subset of scanning points of the roadway (13), wherein the point cloud (6) and the further point cloud are generated during different time periods;
- the computation unit (4) is used to identify a further pair of scanning points, wherein one point of the further pair is part of the first further subset, a further point of the further pair is part of the second further subset, and a projection of a further connection vector of the further pair into the transmission plane is parallel to the longitudinal axis (15) of the sensor system (2);
- a further angle, which the further connection vector encloses with the longitudinal axis (15) of the sensor system (2), is determined by means of the computation unit (4); and
- a mean value is determined by means of the computation unit (4) as a function of the first angle (δ) and the further angle in order to determine the pitch angle position.

6. Method according to one of Claims 1 to 5,
**characterized in that**
the point cloud (6) is generated by means of the sensor system (2) as a function of a yaw angle position of the sensor system (2).

7. Active optical sensor system for mounting on a motor vehicle (1), having
- a transmission unit (8), which is configured to emit light (3) into a surrounding area of the sensor system (2);
- a reception unit (9), which is configured to detect reflected components (5) of the light (3) and to generate at least one sensor signal based on the detected reflected components (5); and
- a computation unit (4), which is coupled to the reception unit (8) in order to receive the at least one sensor signal; wherein the computing unit (4) is configured
- to generate, based on the at least one sensor signal, a point cloud (6), which contains a first subset (7a) of scanning points of a roadway (13) on which the motor vehicle (1) is located, and a second subset (7b) of scanning points of the roadway (13); **characterized in that** the computing unit is furthermore configured
- to identify a first pair (A, B) of scanning points, wherein one point (A) of the first pair (A, B) is part of the first subset (7a), a further point (B) of the first pair (A, B) is part of the second subset (7b), and a projection (14') of a first connection vector (14) of the first pair (A, B) into a transmission plane of the sensor system (2) is parallel to a longitudinal axis (15) of the sensor system (2); and
- to determine a first angle (δ), which the first connection vector (14) encloses with the longitudinal axis (15) of the sensor system (2), in order to determine a pitch angle position of the sensor system (2).

8. Active optical sensor system according to Claim 7, **characterized in that**
- the reception unit (9) has a first optical detector (10), which is configured to detect first reflected components of the light (3) and, based thereon, to generate a first sensor signal of the at least one sensor signal;
- the reception unit (9) has a second optical detector (11), which is configured to detect second reflected components of the light (3) and, based thereon, to generate a second sensor signal of the at least one sensor signal; and
- the computation unit (4) is configured to generate the first subset (7a) based on the first sensor signal and to generate the second subset (7b) based on the second sensor signal.

9. Active optical sensor system according to Claim 8, **characterized in that**
the first optical detector (10) and the second optical detector (11) are arranged along a direction parallel to a normal axis of the sensor system (2).

10. Active optical sensor system according to one of Claims 7 to 9,
**characterized in that** the computing unit (4) is configured
- to identify a second pair (A', B') of scanning points, wherein one point (A') of the second pair (A', B') is part of the first subset (7a), a further point (B') of the second pair (A', B') is part of the second subset (7b), and a projection of a second connection vector of the second pair into the transmission plane is parallel to the longitudinal axis (15) of the sensor system;
- to determine a second angle, which the second connection vector encloses with the longitudinal axis (15) of the sensor system (2); and
- to determine a mean value as a function of the first angle (δ) and the second angle in order to determine the pitch angle position.

11. Active optical sensor system according to one of Claims 7 to 10,
**characterized in that** the computing unit (4) is configured
- to generate, based on the at least one sensor signal, a further point cloud, which contains a first further subset of scanning points of the roadway (13) and a second further subset of scanning points of the roadway (13), wherein the point cloud (6) and the further point cloud are generated during different time periods;
- to identify a further pair of scanning points, wherein one point of the further pair is part of the first further subset, a further point of the further pair is part of the second further subset, and a projection of a further connection vector of the further pair into the transmission plane is parallel to the longitudinal axis (15) of the sensor system;
- to determine a further angle, which the further connection vector encloses with the longitudinal axis of the sensor system (2); and
- to determine a mean value as a function of the first angle (δ) and the further angle in order to determine the pitch angle position.

12. Active optical sensor system according to one of Claims 7 to 11,
**characterized in that**
the computation unit (14) is configured to generate the point cloud (6) as a function of a yaw angle position of the sensor system (2).

13. Motor vehicle with an active optical sensor system (2) according to one of Claims 7 to 12.

14. Computer program with instructions which, when the computer program is executed by an active optical sensor system (2) according to one of Claims 7 to 12, cause the sensor system (2) to carry out a method according to one of Claims 1 to 6.

15. Computer-readable storage medium on which a computer program according to Claim 14 is stored.

## Revendications

1. Procédé pour déterminer la position angulaire de tangage d'un système (2) de détection optique active monté sur un véhicule automobile (1) se trouvant sur une chaussée (13),
dans lequel
- le système de détection (2) génère un nuage de points (6) qui contient un premier sous-ensemble (7a) de points de balayage de la chaussée (13) et un deuxième sous-ensemble (7b) de points de balayage de la chaussée (13) ; **caractérisé en ce que**
- une première paire (A, B) de points de balayage est identifiée au moyen d'une unité de calcul (4) du système de détection (2), un point (A) de la première paire (A, B) faisant partie du premier sous-ensemble (7a), un autre point (B) de la première paire (A, B) faisant partie du deuxième sous-ensemble (7b), et une projection (14') d'un premier vecteur de liaison (14) de la première paire (A, B) dans un plan d'émission du système de détection (2) étant parallèle à un axe longitudinal (15) du système de détection (2) ; et
- un premier angle (δ), que forme le premier vecteur de liaison (14) avec l'axe longitudinal (15) du système de détection (2), est déterminé au moyen de l'unité de calcul (4), afin de déterminer la position angulaire de tangage.

2. Procédé selon la revendication 1,
**caractérisé en ce que**, pour générer le nuage de points (6),
- de la lumière (3) est émise au moyen d'une unité d'émission (8) du système de détection (2) dans un environnement du système de détection (2) ;
- les parties réfléchies (5) de la lumière (3) sont détectées par une unité de réception (9) du système de détection (2) ;
- au moins un signal de capteur est généré au moyen de l'unité de réception (9) sur la base des parties réfléchies détectées (5) ; et
- le nuage de points (6) est généré au moyen de l'unité de calcul (4) sur la base dudit au moins un signal de capteur.

3. Procédé selon l'une des revendications 1 ou 2,
**caractérisé en ce que**
- les points de balayage du premier sous-ensemble (7a) sont générés au moyen d'un premier détecteur optique (10) du système de détection (2) ; et
- les points de balayage du deuxième sous-ensemble (7b) sont générés au moyen d'un deuxième détecteur optique (11) du système de détection (2).

4. Procédé selon l'une des revendications 1 à 3,
**caractérisé en ce que**
- une deuxième paire (A', B') de points de balayage est identifiée au moyen de l'unité de calcul (4), un point (A') de la deuxième paire (A', B') faisant partie du premier sous-ensemble (7a), un autre point (B') de la deuxième paire (A', B') faisant partie du deuxième sous-ensemble (7b), et une projection d'un deuxième vecteur de liaison de la deuxième paire dans le plan d'émission étant parallèle à l'axe longitudinal (15) du système de détection (2) ;
- un deuxième angle, que le deuxième vecteur de liaison forme avec l'axe longitudinal (15) du système de détection, est déterminé au moyen de l'unité de calcul (4) ; et
- une valeur moyenne est déterminée au moyen de l'unité de calcul (4) en fonction du premier angle (δ) et du deuxième angle, afin de déterminer la position angulaire de tangage.

5. Procédé selon l'une des revendications 1 à 4,
**caractérisé en ce que**
- un autre nuage de points est généré au moyen du système de détection (2), lequel contient un premier sous-ensemble supplémentaire de points de balayage de la chaussée (13) et un deuxième sous-ensemble supplémentaire de points de balayage de la chaussée (13), le nuage de points (6) et ledit autre nuage de points étant générés pendant des périodes différentes ;
- l'unité de calcul (4) identifie une autre paire de points de balayage, un point de l'autre paire faisant partie du premier sous-ensemble supplémentaire, un autre point de l'autre paire faisant partie dudit deuxième sous-ensemble supplémentaire et une projection d'un autre vecteur de connexion de l'autre paire dans le plan d'émission étant parallèle à l'axe longitudinal (15) du système de détection (2) ;
- un autre angle, que ledit autre vecteur de liaison forme avec l'axe longitudinal (15) du système de détection (2) est déterminé au moyen de l'unité de calcul (4) ; et
- une valeur moyenne est déterminée au moyen de l'unité de calcul (4) en fonction du premier angle (δ) et de l'autre angle, afin de déterminer la position angulaire de tangage.

6. Procédé selon l'une des revendications 1 à 5,
**caractérisé en ce que**
le nuage de points (6) est généré au moyen du système de détection (2) en fonction d'une position angulaire de lacet du système de détection (2).

7. Système de détection optique active destiné à être monté sur un véhicule automobile (1), comprenant
- une unité d'émission (8), conçue pour émettre de la lumière (3) dans l'environnement du système de détection (2) ;
- une unité de réception (9), conçue pour détecter les parties réfléchies (5) de la lumière (3) et pour générer au moins un signal de capteur sur la base des parties réfléchies détectées (5) ; et
- une unité de calcul (4), reliée à l'unité de réception (8) pour recevoir ledit au moins un signal de capteur ;
l'unité de calcul (4) étant conçue de façon à
- générer, sur la base dudit au moins un signal de capteur, un nuage de points (6) qui contient un premier sous-ensemble (7a) de points de balayage d'une chaussée (13) sur laquelle se trouve le véhicule automobile (1) et un deuxième sous-ensemble (7b) de points de balayage de la chaussée (13) ; **caractérisé en ce que** l'unité de calcul est en outre conçue de façon à
- identifier une première paire (A, B) de points de balayage, un point (A) de la première paire (A, B) faisant partie du premier sous-ensemble (7a), un autre point (B) de la première paire (A, B) faisant partie du deuxième sous-ensemble (7b) et une projection (14') d'un premier vecteur de liaison (14) de la première paire (A, B) dans un plan d'émission du système de détection (2) étant parallèle à un axe longitudinal (15) du système de détection (2) ; et
déterminer un premier angle (δ) que forme le premier vecteur de liaison (14) avec l'axe longitudinal (15) du système de détection (2) afin de déterminer une position angulaire de tangage du système de détection (2).

8. Système de détection optique active selon la revendication 7,
**caractérisé en ce que**
- l'unité de réception (9) comprend un premier détecteur optique (10) conçu de façon à détecter les premières parties réfléchies de la lumière (3) et à générer sur cette base un premier signal de capteur parmi au moins un signal de capteur ;
- l'unité de réception (9) comprend un deuxième détecteur optique (11) qui est conçu de façon à détecter des deuxièmes parties réfléchies de la lumière (3) et à générer, sur cette base, un deuxième signal de capteur parmi lesdits au moins un signal de capteur ; et
- l'unité de calcul (4) est conçue de façon à générer le premier sous-ensemble (7a) sur la base du premier signal de capteur et à générer le deuxième sous-ensemble (7b) sur la base du deuxième signal de capteur.

9. Système de détection optique active selon la revendication 8,
**caractérisé en ce que**
le premier détecteur optique (10) et le deuxième détecteur optique (11) sont agencés le long d'une direction parallèle à un axe normal du système de détection (2).

10. Système de détection optique active selon l'une des revendications 7 à 9,
**caractérisé en ce que** l'unité de calcul (4) est conçue de façon à
- identifier une deuxième paire (A', B') de points de balayage, un point (A') de la deuxième paire (A', B') faisant partie du premier sous-ensemble (7a), un autre point (B') de la deuxième paire (A', B') faisant partie du deuxième sous-ensemble (7b) et une projection d'un deuxième vecteur de liaison de la deuxième paire dans le plan d'émission étant parallèle à l'axe longitudinal (15) du système de détection ;
- déterminer un deuxième angle que le deuxième vecteur de liaison forme avec l'axe longitudinal (15) du système de détection (2) ; et
- déterminer une valeur moyenne en fonction du premier angle (δ) et du deuxième angle afin de déterminer la position angulaire de tangage.

11. Système de détection optique active selon l'une des revendications 7 à 10,
**caractérisé en ce que** l'unité de calcul (4) est conçue de façon à
- générer, sur la base dudit au moins un signal de capteur, un autre nuage de points contenant un premier sous-ensemble supplémentaire de points de balayage de la chaussée (13) et un deuxième sous-ensemble supplémentaire de points de balayage de la chaussée (13), le nuage de points (6) et l'autre nuage de points étant générés pendant des périodes de temps différentes ;
- identifier une autre paire de points de balayage, un point de l'autre paire faisant partie du premier sous-ensemble supplémentaire, un autre point de l'autre paire faisant partie du deuxième sous-ensemble supplémentaire et une projection d'un autre vecteur de connexion de l'autre paire dans le plan d'émission étant parallèle à l'axe longitudinal (15) du système de détection ;
- déterminer un autre angle que ledit autre vecteur de liaison forme avec l'axe longitudinal du système de détection (2) ; et
- déterminer une valeur moyenne en fonction du premier angle (δ) et de l'autre angle pour déterminer la position angulaire de tangage.

12. Système de détection optique active selon l'une des revendications 7 à 11,
**caractérisé en ce que**
l'unité de calcul (14) est conçue de façon à générer le nuage de points (6) en fonction de la position angulaire de lacet du système de détection (2).

13. Véhicule automobile équipé d'un système (2) de détection optique active selon l'une des revendications 7 à 12.

14. Programme informatique avec des instructions qui, lors de l'exécution du programme informatique par un système (2) de détection optique active selon l'une des revendications 7 à 12, amènent le système de détection (2) à mettre en œuvre un procédé selon l'une des revendications 1 à 6.

15. Support de stockage lisible par ordinateur sur lequel est enregistré un programme informatique selon la revendication 14.
